# EUROPEAN PATENT APPLICATION

(11) **EP 2 706 755 A2**
(43) Date of publication of application: **12.03.2014**
(21) Application number: 11783034.9
(22) Date of filing: 27.05.2011
(51) Int. Cl.: H04N 21/44, H04N 21/845, H04N 13/00

(54) **MEDIA TRANSMISSION METHOD, MEDIA RECEPTION METHOD, CLIENT AND SYSTEM THEREOF**

(71) Applicant: Huawei Technologies Co., Ltd., Shenzhen, Guangdong 518129 (CN)
(72) Inventor: ZHANG, Yuanyuan, Shenzhen Guangdong 518129 (CN); HUI, Yu, Shenzhen Guangdong 518129 (CN); SHI, Teng, Shenzhen Guangdong 518129 (CN); ZHANG, Chuxiong, Shenzhen Guangdong 518129 (CN)
(74) Representative: Maiwald Patentanwalts GmbH
(86) International application number: PCT/CN2011/074814
(87) International publication number: WO 2011/144117

(57) **Abstract**

The present invention provides a media sending method, a media receiving method, and a client and a system. The media receiving method includes: receiving a media presentation description, where the media presentation description includes 3D format description information of a video; selecting a presentation according to the 3D format description information, and sending a segment obtaining request to a server corresponding to the selected presentation according to segment information in the media presentation description, where the segment obtaining request is used to obtain a segment of the selected presentation; and receiving the segment requested by the segment obtaining request. The present invention solves the disadvantage of the prior art that a receiver can receive 3D format description information only long after starting media reception, and shortens the time of determining, by the client, the 3D format used by the video in the sent media.

## Description

### TECHNICAL FIELD

Embodiments of the present invention relate to media technologies, and in particular, to a media sending method, a media receiving method, and a client and system.

### BACKGROUND

A 3D (Three Dimensional) video may use different formats when it is transmitted or stored. Common 3D format types include: frame packing (frame packing), 2D (Two Dimensional) plus auxiliary video (2d plus auxiliary video), and simulcast (Simulcast). To process the 3D video correctly, a server needs to provide some information for a client. The information is collectively referred to as 3D format description information. With the 3D format description information, the client can determine a 3D format that the video uses, and therefore, the client can process the 3D video sent by the server. For example, the 3D video is processed, and a left view to be projected to a left eye and a right view to be projected to a right eye are obtained.

In a media transmission method of the prior art, if media includes a video of a frame packing format, 3D format description information describing the frame packing format is packed in a frame packing arrangement SEI message (frame packing arrangement supplemental enhancement information message), and then, the frame packing arrangement SEI message is packed in a video sample, and then, the video sample is packed in a segment. After the client obtains a media presentation description (Media Presentation Description, MPD), the client obtains a segment of a presentation according to segment information corresponding to the presentation in the MPD. After the client receives the segment carrying the video sample, the client obtains the video sample including the frame packing arrangement supplemental enhancement information message from the segment, then obtains the frame packing arrangement supplemental enhancement information message from the video sample, and then obtains the 3D format description information describing the frame packing format. The presentation is a form of media, and is a structured set of one or more media components, while the media component refers to a single media type having a specific attribute, such as an audio, a video, and a timed text. In the method, because the 3D format description information describing the frame packing format is carried in the frame packing arrangement supplemental enhancement information message in the video sample, and only one video sample in each plurality of video samples includes the frame packing arrangement supplemental enhancement information message, the client can obtain the 3D format description information describing the frame packing format only long after starting media reception and then determine the 3D format used by the video in the media.

Because a multimedia system is generally a heterogeneous system, it is possible that some clients do not support the 3D format used by a video. If the technical solution of the prior art is used, the client can determine the 3D format used by the video in the media only long after starting media reception, that is, determine the 3D format used by the video in the media only after obtaining the video sample carrying the 3D format description information, and then further determine that the client itself does not support the 3D format used by the video. This, on the one hand, affects user experience, for example, after the user clicks to play the media, the user needs to wait for a long period of time before error information is presented to the user, where the error information indicates that the client does not support processing and displaying of the video in the media, and on the other hand, increases the overhead for receiving and processing the media, increases electric power consumption, and in particular, increases the burden of a mobile client that is sensitive to electric power.

### SUMMARY

Embodiments of the present invention provide a media sending method, a media receiving method, and a client and a system, which are used to solve the disadvantage of the prior art that a client can obtain 3D format description information only long after starting media reception, that is, after obtaining a video sample carrying 3D format description information, and shorten the time of determining, by the client, the 3D format used by the video in the received media.

An embodiment of the present invention provides a media sending method, including:
sending a media presentation description MPD to a client, where the media presentation description includes 3D format description information of a video;
receiving a segment obtaining request sent by the client, where the segment obtaining request is used to obtain a segment of a selected presentation, where the selected presentation is a presentation selected by the client according to the 3D format description information; and
sending the segment, requested by the client, of the selected presentation to the client according to the segment obtaining request.

An embodiment of the present invention provides a media receiving method, including:
receiving a media presentation description, where the media presentation description includes 3D format description information of a video;
selecting a presentation according to the 3D format description information, and sending a segment obtaining request to a server corresponding to the selected presentation according to segment information in the media presentation description, where the segment obtaining request is used to obtain a segment of the selected presentation; and
receiving the segment requested by the segment obtaining request.

The present invention further provides a client, including:
an MPD receiving module, configured to receive a media presentation description, where the media presentation description includes 3D format description information of a video;
a selecting module, configured to select a presentation according to the 3D format description information;
a sending module, configured to send a segment obtaining request to a server corresponding to the selected presentation according to segment information in the media presentation description, where the segment obtaining request is used to obtain a segment of the selected presentation; and
a segment receiving module, configured to receive the segment requested by the segment obtaining request.

The present invention further provides a media sending system, including:
a first server, configured to send a media presentation description to a client, where the media presentation description includes 3D format description information of a video, and the first server is a server storing the media presentation description;
the second server, configured to receive a segment obtaining request sent by the client, and send a segment, requested by the client, of a selected presentation to the client according to the segment obtaining request, where the segment obtaining request is used to obtain the segment of the selected presentation, the selected presentation is a presentation selected by the client according to the 3D format description information, and the second server is a server storing the segment of the selected presentation.

The present invention further provides a media transmitting system, including:
a first server, configured to send a media presentation description to a client, where the media presentation description includes 3D format description information of a video, and the first server is a server storing the media presentation description;
the client, configured to select a presentation according to the 3D format description information, and send a segment obtaining request to a second server according to segment information in the media presentation description, where the segment obtaining request is used to obtain a segment of the selected presentation, and the selected presentation is a presentation selected by the client according to the 3D format description information; and
the second server, configured to send the segment, requested by the client, of the selected presentation to the client according to the segment obtaining request, where the second server is a server storing the segment of the selected presentation.

In the media sending method, media receiving method, and client and system in the embodiments of the present invention, a server adds 3D format description information of a video to an MPD. The server first sends an MPD that includes 3D format description information of a video to the client; before obtaining media, the client may determine, according to the 3D format description information in the MPD, a 3D format used by the video in the media, thereby determining whether to select the corresponding presentation. After the client selects the presentation, the client obtains a segment of the selected presentation from the corresponding server according to the segment information corresponding to the selected presentation in the MPD. Therefore, the embodiments of the present invention shorten the time of determining, by the client, the 3D format used by the video in the media to be sent by the server, and solve the disadvantage of the prior art that the client can obtain 3D format description information only long after starting media reception, namely, after obtaining a video sample carrying 3D format description information. The server only provides the segment to the client matching the 3D format used by the video in the corresponding media, and the client only obtains the segment in which the 3D format used by the video in the corresponding media matches the 3D format supported by the client. Therefore, in the case that the sending capabilities of the server do not change, the number of served clients is increased, and the overhead for sending media is reduced. Both sending and obtaining of the 3D format description information may be implemented by software upgrade, without involving hardware changes, which may maximally protect the original investment of an operator.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a media sending method according to an embodiment of the present invention;
FIG. 2 is a flowchart of a media receiving method according to an embodiment of the present invention;
FIG. 3 is a flowchart of another media receiving method according to an embodiment of the present invention;
FIG. 4 is a flowchart of another media receiving method according to an embodiment of the present invention;
FIG. 5 is a schematic structural diagram of a client according to an embodiment of the invention;
FIG. 6 is a schematic structural diagram of a media sending system according to an embodiment of the invention; and
FIG. 7 is a schematic structural diagram of a media transmitting system according to an embodiment of the invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions disclosed by the embodiments of the present invention may be applied in an HTTP Streaming system. The HTTP Streaming system may implement transmission of multimedia content through an existing HTTP protocol, and provide good experience similar to conventional streaming to a user. The HTTP Streaming system is improved based on the conventional HTTP Progressive Download, and aims to bring better user experience. In addition, the HTTP Streaming system can transmit, by using widely deployed HTTP servers and cache devices, multimedia content segmented according to an HTTP Streaming requirement to a terminal device for playing.

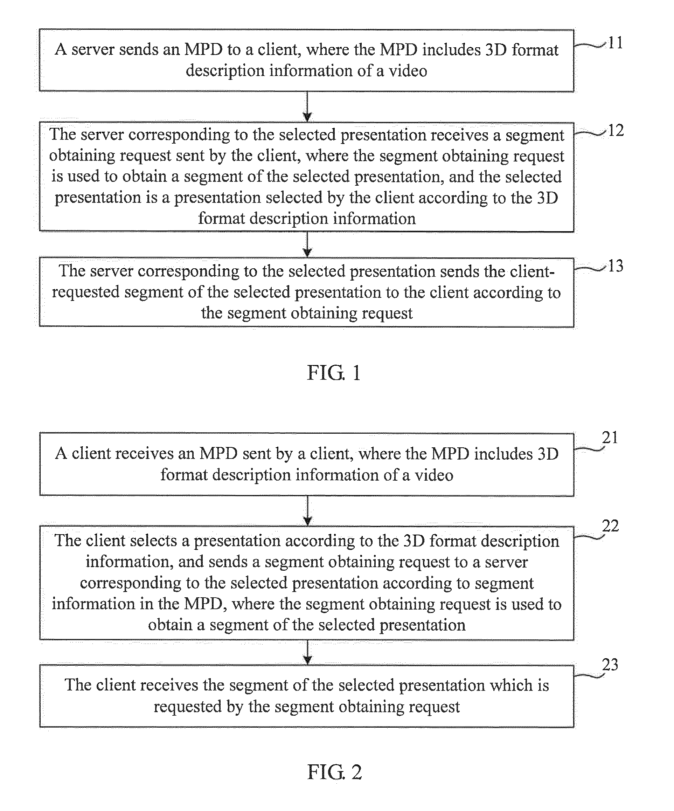

FIG. 1 is a flowchart of a media sending method according to an embodiment of the present invention. As shown in FIG. 1, this embodiment includes:

Step 11: A server sends an MPD to a client, where the MPD includes 3D format description information of a video. The server is a server storing the MPD.

The server storing the MPD first sends the MPD to the client before sending media. After selecting a presentation according to the MPD, the client obtains a segment of the selected presentation according to segment information corresponding to the selected presentation. The MPD is a formal description of the media presentation; the MPD may describe multiple presentations, and videos in different presentations may use different 3D formats. Each presentation includes a group of segments. Segments of different presentations may come from different servers. Segments of a same presentation may also come from different servers.

In order for the client to determine the 3D format used by the video in the media before the client receives the media, the server packs the 3D format description information of the video in the media into the MPD. The MPD is generally in an extensible markup language (Extensible Markup Language, XML) form. The MPD may be extended, and an XML element or attribute used to carry the 3D format description information may be added to the MPD.

The 3D format description information includes 3D format identifier information used to indicate the 3D format used by the video, where the 3D format identifier information at least includes a 3D format type identifier, which indicates the 3D format type used by the video. The 3D format identifier information may further include a component type identifier, which indicates the type of a video component making up the 3D video. Further, the 3D format description information in the MPD further includes 3D video processing parameter information, which is used by the client for processing the received 3D video to obtain a left view to be projected to a left eye and a right view to be projected to a right eye. In addition, the 3D video processing parameter information may be packed into an initialization segment or a self-initialization media segment.

Step 12: The server corresponding to the selected presentation receives a segment obtaining request sent by the client, where the segment obtaining request is used to obtain a segment of the selected presentation, and the selected presentation is a presentation selected by the client according to the 3D format description information.

The client may determine, according to the 3D format description information in the MPD, the 3D format used by the video in the presentation described by the MPD. If the client supports the 3D format used by the video in the presentation, the presentation may be selected. After the presentation is selected, the client sends, according to the segment information corresponding to the selected presentation, a segment obtaining request to the server corresponding to the selected presentation, so as to obtain the segment of the selected presentation. If the 3D format used by the video in the presentation described by the MPD is not supported, the client may output prompt information indicating that the 3D format is not matched. The server corresponding to the selected presentation is a server storing the segment of the selected presentation.

Step 13: The server corresponding to the selected presentation sends the segment, requested by the client, of the selected presentation to the client according to the segment obtaining request.

In the embodiment of the present invention, the server adds 3D format description information of a video to an MPD. The server first sends an MPD that includes 3D format description information of a video to the client; before obtaining media, the client may determine, according to the 3D format description information in the MPD, a 3D format used by the video in the media, and thereby determine whether to select the corresponding presentation. After the client selects the presentation, the client obtains a segment of the selected presentation from the corresponding server according to the segment information corresponding to the selected presentation in the MPD. Therefore, the embodiment of the present invention shortens the time of determining, by the client, the 3D format used by the video in the media to be sent by the server, and solves the disadvantage of the prior art that the client can obtain 3D format description information only long after starting media reception, namely, after obtaining a video sample carrying 3D format description information. The server provides the segment to only the client matching the 3D format used by the video in the corresponding media, and the client only obtains the segment in which the 3D format used by the video in the corresponding media matches the 3D format supported by the client. Therefore, in the case that the sending capabilities of the server do not change, the number of served clients is increased, and overheads of sending media are reduced. Both sending and obtaining of the 3D format description information may be implemented by software upgrade, without involving hardware changes, which may maximally protect the original investment of an operator.

FIG. 2 is a flowchart of a media receiving method according to an embodiment of the present invention. As shown in FIG. 2, this embodiment includes:

Step 21: A client receives an MPD sent by a server, where the MPD includes 3D format description information of a video. The server is a server storing the MPD.

Step 22: The client selects a presentation according to the 3D format description information, and sends a segment obtaining request to a server corresponding to the selected presentation according to segment information in the MPD, where the segment obtaining request is used to obtain a segment of the selected presentation.

The client obtains the 3D format description information from the MPD, and determines, according to the 3D format description information, the 3D format used by the video in the presentation described by the MPD; when the client supports the 3D format used by the video in the presentation, the client may select the presentation, and send, according to the segment information in the MPD, a segment obtaining request to the server corresponding to the selected presentation, so as to obtain the segment of the selected presentation. The segment of the selected presentation includes a group of segments. Different segments of different presentations in the MPD may come from different servers, and even different segments of a same presentation may also come from different servers. Therefore, to obtain the segment of the selected presentation, the client needs to send a group of segment obtaining requests, and it is possible that the client sends segment obtaining requests to multiple servers, respectively. The server corresponding to the selected presentation is a server storing one or more segments corresponding to the selected presentation.

If the segment information corresponding to the selected presentation includes an HTTP URL of the initialization segment, the segment of the selected presentation includes the initialization segment and a group of media segments. The initialization segment carries initialization information used to initialize a media engine for playing a media segment. Before obtaining the media segment, the client first sends, according to the HTTP URL of the initialization segment, a segment obtaining request for obtaining the initialization segment to the corresponding server. In this case, an initialization segment is requested by the first segment obtaining request. The media segment carries media content of a period or length; according to the composition structure of the presentation, the media segment may include one or more media components of a period or length. When a same media segment includes media components of a video type, a video sample may be obtained from the media segment. A segment is uniquely identified by a Hypertext Transfer Protocol (Hypertext Transfer Protocol, HTTP) uniform resource locator (Uniform Resource Locator, URL), or is uniquely identified by an HTTP URL and a byte range (byte range). The media segment carries media content of the selected presentation. After a user selects to play media, the client sends segment obtaining requests to the corresponding servers in sequence according to the HTTP URL or the HTTP URL and byte range, which are used for obtaining media segments and provided in the segment information corresponding to the selected presentation, obtains media segments from the corresponding servers, and plays the media segments in sequence until the user selects to stop media playing. In the embodiment of the present invention, the segment obtaining request may be an HTTP GET request message.

If the segment information corresponding to the selected presentation in the MPD does not include the URL of the initialization segment, the segment of the selected presentation does not include the initialization segment and only includes a group of media segments, but each media segment is self-initialized (referred to as a self-initialization media segment). That is, each self-initialization media segment carries initialization information used to initialize a media engine for playing a media segment, and further carries media content. In this case, a self-initialization media segment is requested by the first segment obtaining request.

Step 23: The client receives the segment of the selected presentation which is requested by the segment obtaining request.

If an initialization segment is requested by the first segment obtaining request in step 22, in step 23, the initialization segment is first received, and then subsequent media segments are received. If a self-initialization media segment is requested by the first segment obtaining request in step 22, those obtained in step 23 are all self-initialization media segments.

In the embodiment of the present Invention, the client first receives an MPD that includes 3D format description information of a video and is sent by the server; therefore, before obtaining media, the client may determine, according to the 3D format description information in the MPD, a 3D format used by the video in the media, and thereby determine whether to select the corresponding presentation. After the client selects the presentation, the client obtains a segment of the selected presentation from the corresponding server according to the segment information corresponding to the selected presentation in the MPD. Therefore, the embodiment of the present invention shortens the time of determining, by the client, the 3D format used by the video in the media to be sent by the server, and solves the disadvantage of the prior art that the client can obtain 3D format description information only long after starting media reception, namely, after obtaining a video sample carrying 3D format description information. The server provides the segment of the corresponding presentation to only the receiver of the client that supports the 3D format used by the video in the media, and the client only obtains the segment of the corresponding presentation in which the 3D format used by the video in the media matches the 3D format supported by the client. Therefore, in the case that the sending capabilities of the server do not change, the number of served clients is increased, overheads of receiving and processing media are reduced, and electric power consumption of the receiver is reduced.

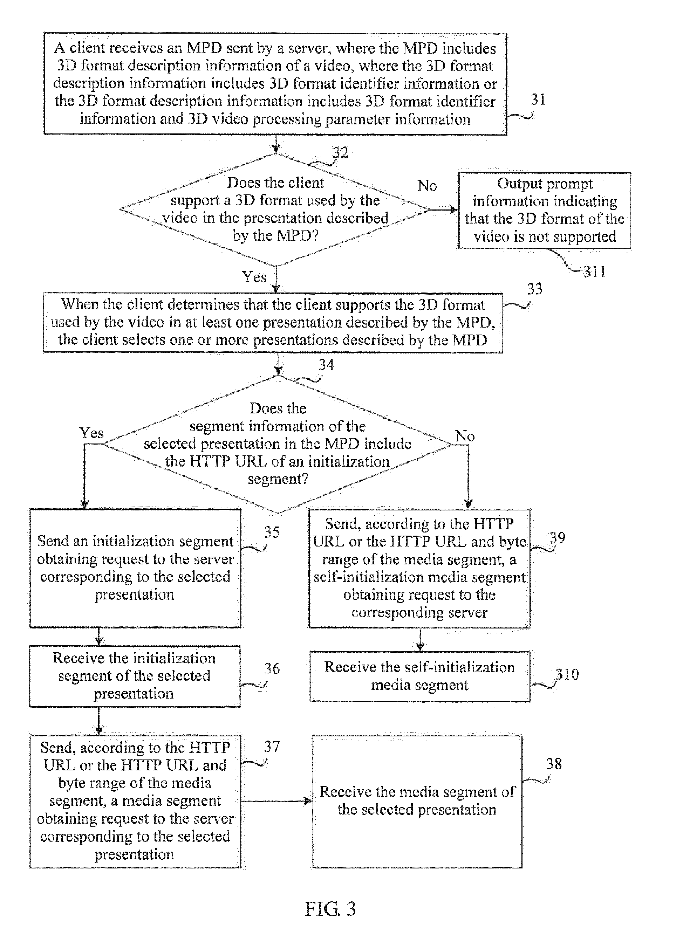

FIG. 3 is a flowchart of another media receiving method according to an embodiment of the present invention. In this embodiment, the 3D format description information of the video in the MPD includes 3D format identifier information, and 3D video processing parameter information may also be included in the 3D format description information of the MPD. As shown in FIG. 3, this embodiment includes:

Step 31: A client receives an MPD sent by a server, where the MPD includes 3D format description information of a video, where the 3D format description information includes 3D format identifier information or the 3D format description information includes 3D format identifier information and 3D video processing parameter information.

The 3D format description information of the video in the MPD may only include the 3D format identifier information, while the 3D video processing parameter information is carried in a video sample. The 3D format identifier information includes a 3D format type identifier, which is used to indicate that the type of the 3D format used by the video is one of frame packing, 2D plus auxiliary video, simulcast, and so on.

In addition, the 3D format identifier information may further include a component type identifier. The component type identifier indicates the type of a video component making up the 3D video. Specifically, if the 3D format type is frame packing, the component type identifier indicates that the type of a component video is one of videos arranged according to a frame packing arrangement mode such as side by side (side by side, SBS), top and bottom (top and bottom, TAB), line interleaved (line interleaved, LIl), column interleaved (column interleaved, CIl), chessboard (Chessboard, CHB), and frame sequence (frame sequential, SEQ). If the 3D format type is 2D plus auxiliary video, the component type identifier indicates that the component type of the video is 2D video, auxiliary video, or inclusive of both 2D video and auxiliary video. The component type identifier may further indicate the type of the auxiliary video. The type of the auxiliary video may be one of depth map, parallax map, hole data, and so on; the component type identifier may further indicate whether the 2D video is one of a video carrying a left view, a video carrying a right view, and a video carrying a middle view. If the 3D format type is simulcast, the component type identifier indicates that the video component type is one of video carrying a left view, video carrying a right view, and video carrying both a left view and a right view.

The 3D format description information in the MPD may further include 3D video processing parameter information in addition to the 3D format identifier information. Specifically, if the 3D format type is frame packing, the 3D video processing parameter information includes but is not limited to parameter information such as identifier information of a sampling type during frame packing and identifier information of frame placement order during a frame packing operation; if the 3D format type is 2D plus auxiliary video and the auxiliary video is a depth map, the 3D video processing parameter information includes but is not limited to parameter information such as a horizontal offset and vertical offset of a depth sample in a spatial sampling grid of the 2D video, and depth value range indication information, that is, a maximum distance behind the screen and a maximum distance before the screen; if the 3D format type is 2D plus auxiliary video and the auxiliary video is a parallax map, the 3D video processing parameter information includes but is not limited to parameter information such as a horizontal offset and vertical offset of a parallax sample in the spatial sampling grid of the 2D video, a value indicating zero parallax, a zooming ratio for defining the parallax value range, a reference viewing distance, and a reference screen width.

Step 32: The client determines, according to the 3D format identifier information, a 3D format used by the video in the presentation described by the MPD, and determines whether the client supports the 3D format used by the video in the presentation described by the MPD. If the client supports the 3D format used by the video in at least one presentation described by the MPD, step 33 is executed; if the client does not support the 3D format used by the video in any presentation described by the MPD, step 311 is executed.

The client obtains the 3D format identifier information from the 3D format description information, where the 3D format identifier information indicates the 3D format used by the video. The client may determine, according to the 3D format identifier information, the 3D format used by the video in the presentation described by the MPD, and determine whether the client supports the 3D format used by the video in the presentation described by the MPD. In addition, the 3D video processing parameter information may be obtained from the 3D format description information.

The 3D format identifier information at least includes the 3D format type identifier; the client may determine, according to the 3D format type identifier, the 3D format type used by the 3D video and determines whether the client supports the 3D format type. When the 3D format type is supported, the client determines that the 3D format of the video in the presentation described by the MPD is supported.

The 3D format identifier information may further include the component type identifier; when the 3D format type is supported, the client further determines, according to the component type identifier, the type of a component making up the 3D video, and determines whether the component type is supported. When the component type is supported, the client determines that the 3D format of the video in the presentation described by the MPD is supported.

Step 33: When the client determines that the client supports the 3D format used by the video in at least one presentation described by the MPD, the client selects one or more presentations described by the MPD.

It should be noted that the MPD may include multiple presentations. When the client does not support the 3D format used by the video in any presentation, step 311 is executed: The client outputs prompt information indicating that the 3D format of the video is not supported. The client may present the prompt information to a user, and the user selects a subsequent operation, for example, reselects to play other media content. In addition, the presentation selected by the client in step 33 includes: one or more presentations, in which the 3D format used by the video is supported by the client.

When the 3D format type is frame packing, a 3D video is made up of one video component. If the client supports the 3D format used by the 3D video, the presentation selected by the client in step 33 includes: a presentation including the 3D video.

When the 3D format type is 2D plus auxiliary video or simulcast, a 3D video is made up of two video components. The two video components may be included in one presentation; in this case, the presentation selected by the client in step 33 includes: a presentation including the 3D video. The two video components may also be included in two different presentations; in this case, the presentation selected by the client in step 33 includes: two different presentations respectively including two different video components that make up the 3D video.

Step 34: The client determines whether the segment information of the selected presentation in the MPD includes the HTTP URL of an initialization segment. If so, the client executes step 35 to step 38 in sequence; otherwise, executes step 39 to step 310 in sequence.

The client obtains the segment information of the presentation from the MPD. The segment information includes the HTTP URL or the HTTP URL and byte range of the media segment. The client may obtain the media segment of the selected presentation according to the HTTP URL or the HTTP URL and byte range of the media segment. The segment information may further include the HTTP URL of the initialization segment, and the client may obtain the initialization segment of the selected presentation according to the HTTP URL of the initialization segment.

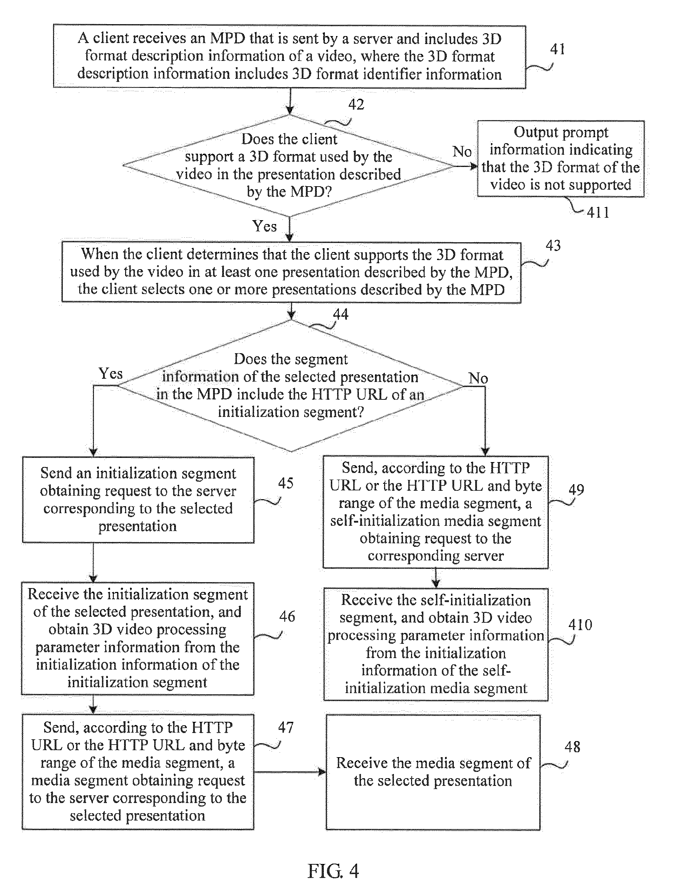

After step 31 or step 33, after receiving the MPD, the client may further parse the MPD, and generate, according to the segment information in the MPD, a segment list for the presentation described by the MPD, where the segment list includes the HTTP URL or the HTTP URL and byte range, for obtaining the segment of the presentation described by the MPD. In step 34, the client determines whether the segment list includes the HTTP URL of the initialization segment. The segment list may use the form shown in Table 3 (in the embodiment corresponding to FIG. 4).

Step 35: The client sends, according to the HTTP URL or the HTTP URL and byte range of the initialization segment, an initialization segment obtaining request to the server corresponding to the selected presentation. The initialization segment obtaining request is used to obtain an initialization segment of the selected presentation.

The initialization segment carries initialization information used to initialize a media engine for playing a media segment, where the media segment carries media content. Before obtaining the media segment, the client first sends, according to the HTTP URL of the initialization segment, a segment obtaining request for obtaining the initialization segment to the corresponding server.

Step 36: The client receives the initialization segment of the selected presentation, which is returned by the server corresponding to the selected presentation and determined according to the HTTP URL or the HTTP URL and byte range in the initialization segment obtaining request.

Step 37: The client sends, according to the HTTP URL or the HTTP URL and byte range of the media segment, a media segment obtaining request to the server corresponding to the selected presentation. The media segment obtaining request is used to obtain a media segment of the selected presentation.

Step 38: The client receives the media segment of the selected presentation, which is returned by the server corresponding to the selected presentation and determined according to the HTTP URL or the HTTP URL and byte range of the media segment in the media segment obtaining request.

Generally, a presentation includes a group of media segments. Therefore, step 37 and step 38 may be executed cyclically many times until the client completes media receiving, for example, the user selects to stop media playing, and the client finishes media receiving.

Step 39: The client sends, according to the HTTP URL or the HTTP URL and byte range of the media segment, a self-initialization media segment obtaining request to the corresponding server. Herein, the corresponding server is a server corresponding to the selected presentation.

The self-initialization media segment obtaining request is used to obtain a self-initialization media segment of the selected presentation.

Step 310: The client receives the self-initialization media segment, which is returned by the server corresponding to the selected presentation and determined according to the HTTP URL or the HTTP URL and byte range of the self-initialization media segment in the self-initialization media segment obtaining request.

The self-initialization media segment includes initialization information used to initialize a media engine for playing a media segment, and may further include media content.

Generally, a presentation includes a group of self-initialization media segments; therefore, step 39 and step 310 may be executed cyclically many times until the client completes media receiving.

Step 311: The client outputs prompt information indicating that the 3D format of the video is not supported.

As shown in Table 1, this embodiment provides a specific method for carrying 3D format identifier information through an XML element or attribute.

If the 3D format type is frame packing, the 3D format identifier information is carried through an XML element or attribute FramePacking. FramePacking indicates that the 3D format type is frame packing, and further indicates that the component type is one of videos arranged according to the frame packing arrangement mode such as side by side (side by side, SBS), top and bottom (top and bottom, TAB), line interleaved (line interleaved, LIl), column interleaved (column interleaved, CIl), chessboard (Chessboard, CHB), and frame sequence (frame sequential, SEQ).

If the 3D format type is 2D plus auxiliary video, the 3D format identifier information is carried through an XML element 2DAux. The 2DAux indicates that the 3D format type is 2D plus auxiliary video. A child element or attribute Type of the 2DAux may be further used to indicate that the component type is 2D video, auxiliary video, or inclusive of both 2D video and auxiliary video. If the component type is auxiliary video or inclusive of both 2D video and auxiliary video, the child element or attribute AuxType of the 2DAux may be further used to indicate that the type of the auxiliary video is one of depth map, parallax map, hole data, and so on; if the component type is 2D video or inclusive of both 2D video and auxiliary video, the child element or attribute ViewType of the 2DAux may be further used to indicate that the view type carried in the 2D video is one of left view, right view, and middle view.

If the 3D format type is simulcast, the 3D format identifier information is carried through an XML element or attribute StereoID. The StereoID indicates that the 3D format type is simulcast, and further indicates the carried view type.

**Table 1 is an instance defined in syntax of an XML element or attribute for carrying 3D format identifier information.**

| FramePacking | | Indicates that the used 3D format type is frame packing, and further indicates the component type. |
|---|---|---|
| | | The value may be: |
| | | 1: The used 3D format type is frame packing, and the video is obtained according to the side by side arrangement mode. |
| | | 2: The used 3D format type is frame packing and the video is obtained according to the top and bottom arrangement mode. |
| | | 3: The used 3D format type is frame packing, and the video is obtained according to the line interleaved arrangement mode. |
| | | 4: The used 3D format type is frame packing and the video is obtained according to the column interleaved arrangement mode. |
| | | 5: The used 3D format type is frame packing and the video is obtained according to the chessboard arrangement mode. |
| | | 6: The used 3D format type is frame packing and the video is obtained according to the frame sequence arrangement mode. |
| | | Indicates that the used 3D format type is 2D plus auxiliary video, optionally including child elements or attributes Type, AuxType, and ViewType |
| | | Type further indicates the component type, and the value may be: |
| | | 1: The used 3D format is 2D plus auxiliary video, and the 2D video in the component. |
| 2DAux | | 2: The used 3D format is 2D plus auxiliary video, and the auxiliary video in the component. |
| | Type | |
| | AuxType | 3: The used 3D format is 2D plus auxiliary video, and the component includes both the 2D video and the auxiliary video. AuxType further indicates the type of the auxiliary video, and the value may be: |
| | ViewType | |
| | | 1: depth map |
| | | 2: parallax view |
| | | 3: hole data |
| | | ViewType further indicates the carried video type, and the value may be: |
| | | L: left view |
| | | R: right view |
| | | C: middle view |
| StereoID | | Indicates that the used 3D format type is simulcast, and further indicates the component type. |
| | | The value may be: |
| | | L: The used 3D format type is simulcast, and the component includes a video carrying a left view. |
| | | R: The used 3D format type is simulcast, and the component includes a video carrying a right view. |
| | | B: The used 3D format type is simulcast, and the component includes both a video carrying a left view and a video carrying a right view. |

This embodiment further provides a specific method for carrying 3D format identifier information through an XML element or attribute:

The 3D format type identifier is carried through an XML element or attribute 3DFormatType. For details about carrying a component type identifier through an XML element or attribute 3DComponentType, reference may be made to Table 2.

**Table 2 is another instance defined in syntax of an XML element or attribute for carrying 3D format identifier information.**

| | |
|---|---|
| 3DFormatType | Indicates the 3D format type. The value may be: |
| | 1: The 3D format type is frame packing. |
| | 2: The 3D format type is 2D plus auxiliary video. |
| | 3: The 3D format type is simulcast. |
| 3DComponentType | Indicates the component type. |
| | If the 3D format type is frame packing, the value may be: |
| | 1: video obtained according to the side by side arrangement mode |
| | 2: video obtained according to the top and bottom arrangement mode |
| | 3: video obtained according to the line interleaved arrangement mode |
| | 4: video obtained according to the column interleaved arrangement mode |
| | 5: video obtained according to the chessboard arrangement mode If the 3D format type is 2D plus auxiliary video, the value may be: |
| | 1: 2D video in the component |
| | 2: depth map in the component |
| | 3: parallax map in the component |
| | 4: hole data in the component |
| | 5: the component includes both 2D video and depth map |
| | 6: the component includes both 2D video and parallax map |
| | If the 3D format type is simulcast, the value may be: |
| | 1: carrying a left view |
| | 2: carrying a right view |
| | 3: carrying both a left view and a right view |

This embodiment provides a specific method for carrying 3D video processing parameter information through an XML element or attribute. Specifically:

If the 3D format type is frame packing, the corresponding 3D video processing parameter information is carried through an XML element FramePackingParameters. The FramePackingParameters may include an XML element or attribute: SamplingType or ContentInterpretationType, respectively indicating the sampling type during frame packing and the frame placement order during a frame packing operation.

If the 3D format type is 2D plus auxiliary video and the auxiliary video type is depth map, the corresponding 3D video processing parameter information is carried through the XML element DepthParameters. The DepthParameters may include an XML element or attribute: position_offset_h, position_offset_v, nkfar, or nknear, respectively indicating a horizontal offset and vertical offset of a depth sample in a spatial sampling grid of the 2D video, a maximum distance behind the screen, and a maximum distance before the screen.

If the 3D format type is 2D plus auxiliary video and the auxiliary video type is parallax map, the corresponding 3D video processing parameter information is carried through the XML element ParallaxParameters. The ParallaxParameters may include an XML element or attribute position_offset_h, position_offset_v, parallax_zero, parallax_scale, and dref or wref, respectively indicating a horizontal offset and vertical offset of a parallax sample in the spatial sampling grid of the 2D video, a value indicating zero parallax, a zooming ratio for defining the parallax value range, a reference viewing distance, and a reference screen width.

In the embodiment of the present Invention, the 3D format description information in the MPD sent by the server includes 3D format identifier information, and may further include 3D video processing parameter information. Before obtaining the media, the client may determine, according to the 3D format identifier information in the MPD, the 3D format used by the video in the media, and thereby determine whether the corresponding presentation may be selected. The client obtains a segment of the selected presentation from the corresponding server according to the segment information of the selected presentation in the MPD only after the client selects the presentation. Therefore, the embodiment of the present invention shortens the time of determining, by the client, the 3D format used by the video in the media to be sent by the server.

FIG. 4 is a flowchart of another media receiving method according to an embodiment of the present invention. 3D format description information in an MPD in this embodiment only includes 3D format identifier information, and initialization information includes 3D video processing parameter information. The initialization information is included in a metadata part in an initialization segment or a self-initialization segment. As shown in FIG. 4, this embodiment includes:

Step 41: A client receives an MPD that is sent by a server and includes 3D format description information, where the 3D format description information includes 3D format identifier information, and the server is a server storing the MPD.

Step 42: The client determines, according to the 3D format identifier information, a 3D format used by the video in the presentation described by the MPD, and determines whether the client supports the 3D format used by the video in the presentation described by the MPD. If the client supports the 3D format used by the video in at least one presentation described by the MPD, step 43 is executed; if the client does not support the 3D format used by the video in any presentation described by the MPD, step 411 is executed.

Step 43: When the client determines that the client supports the 3D format used by the video in at least one presentation described by the MPD, the client selects one or more supported presentations described by the MPD.

Step 44: The client determines whether the segment information of the selected presentation in the MPD includes the HTTP URL of an initialization segment. If so, the client executes step 45 to step 48 in sequence; otherwise, executes step 49 to step 410 in sequence.

After step 41 or step 43, after receiving the MPD, the client may further parse the MPD, and generate, according to the segment information in the MPD, a segment list for the presentation described by the MPD, where the segment list includes the HTTP URL or the HTTP URL and byte range, for obtaining the segment of the presentation described by the MPD. In step 44, the client determines whether the segment list includes the HTTP URL of the initialization segment. The segment list may use the form shown in Table 3.

**Table 3 is a segment list.**

| **Parameter** | | | **Base** | **Description** |
|---|---|---|---|---|
| Segments | | | 1 | Provides a segment URL list. |
| | InitialisationSegment | | 0,1 | Describes an initialization segment; when the parameter is absent, each media segment is self-initialized. |
| | | URL | 1 | URL for obtaining the initialization segment. The URL includes a domain name or address of a server storing the initialization segment. |
| | | ByteRange | 0,1 | Byte range of the initialization segment. If this parameter is absent, it indicates that the resource uniquely identified by the URL for obtaining the initialization segment is an initialization segment; if this parameter is present, it indicates that the data in the byte range of the resource uniquely identified by the URL for obtaining the initialization segment is an initialization segment. |
| | MediaSegment | | 1..N | Each instance describes a media segment. |
| | | startTime | 1 | The approximate start time of the media segment. |
| | | URL | 1 | URL for obtaining the media segment. The URL includes a domain name or address of a server storing the media segment. |
| | | ByteRange | 0,1 | Byte range of the media segment. If this parameter is absent, it indicates that the resource uniquely identified by the URL for obtaining the media segment is a media segment; if this parameter is present, it indicates that the data in the byte range of the resource uniquely identified by the URL for obtaining the media segment is a media segment. |

Step 45: The client sends, according to the HTTP URL or the HTTP URL and byte range of the initialization segment, an initialization segment obtaining request to the server corresponding to the selected presentation. The initialization segment obtaining request is used to obtain an initialization segment of the selected presentation. Step 46: The client receives the initialization segment of the selected presentation, which is returned by the server corresponding to the selected presentation and determined according to the HTTP URL or the HTTP URL and byte range in the initialization segment obtaining request, and obtains 3D video processing parameter information from the initialization information of the initialization segment.

The initialization segment obtaining request may be an HTTP Get request; in this case, the server corresponding to the selected presentation places the initialization segment into the message body of an HTTP Get response and returns it to the client.

Step 47: The client sends, according to the HTTP URL or the HTTP URL and byte range of the media segment, a media segment obtaining request to the server corresponding to the selected presentation. The media segment obtaining request is used to obtain a media segment of the selected presentation.

Step 48: The client receives the media segment of the selected presentation, which is returned by the server corresponding to the selected presentation and determined according to the HTTP URL or the HTTP URL and byte range of the media segment in the media segment obtaining request.

The media segment obtaining request may be an HTTP Get request; in this case, the server corresponding to the selected presentation places the media segment into the message body of an HTTP Get response and returns it to the client.

Afterward, the client may process the 3D video in the media segment according to the 3D video processing parameter information, obtain a left view to be projected to a left eye and a right view to be projected to a right eye, and present the views to a user.

Generally, a presentation includes a group of media segments. Therefore, step 47 and step 48 may be executed cyclically many times until the client completes media receiving, for example, the user selects to stop media playing, and the client finishes media receiving.

Step 49: The client sends, according to the HTTP URL or the HTTP URL and byte range of the media segment, a self-initialization media segment obtaining request to the corresponding server.

The self-initialization media segment obtaining request is used to obtain a self-initialization media segment of the selected presentation. Herein, the corresponding server is a server corresponding to the selected presentation.

Step 410: The client receives the self-initialization media segment of the selected presentation, which is returned by the server corresponding to the selected presentation and determined according to the HTTP URL or the HTTP URL and byte range of the self-initialization media segment in the self-initialization media segment obtaining request, and obtains 3D video processing parameter information from the initialization information of the self-initialization media segment.

The self-initialization media segment obtaining request may be an HTTP Get request; in this case, the server corresponding to the selected presentation places the self-initialization media segment into the message body of an HTTP Get response and returns it to the client.

After step 410, the client may process the 3D video in the self-initialization media segment according to the 3D video processing parameter information, obtain a left view to be projected to a left eye and a right view to be projected to a right eye, and present the views to the user.

Generally, a presentation includes a group of self-initialization media segments. Therefore, step 49 and step 410 may be executed cyclically many times until the client completes media receiving, for example, the user selects to stop media playing, and the client finishes media receiving.

Step 411: The client outputs prompt information indicating that the 3D format of the video is not supported. For the method for carrying 3D format identifier information in the 3D format description information, reference may be made to the description in the embodiment corresponding to FIG. 3. This embodiment provides the implementation of carrying 3D video processing parameter information through initialization information of an initialization segment or a self-initialization media segment; in the following implementation, the 3D video processing parameter information is packed in a metadata entry, where 3D format identifier information may be packed in the metadata entry. Specifically:

Different metadata entries carry 3D video processing parameter information and 3D format identifier information corresponding to different 3D formats. The type or name of a metadata entry indicates a 3D format type identifier in the 3D format identifier information. Other information of the 3D format, for example, 3D component type identifier and 3D video processing parameter information, is carried as content of the metadata entry. The type or name of the metadata entry and content of the metadata entry may be carried through different Boxes (boxes). The type or name of the metadata entry may be carried through an Item Info Box (item information box); the content of the metadata entry is carried through an Item Data Box (item data box). Then, the Box is packed into a Metadata Box (metadata box). Then, the Metadata Box is packed into a 3D video track box (track box). Then, the 3D video track box is packed into a Movie Box included in the initialization segment or self-initialization media segment.

Specifically, if the 3D format type is frame packing, the corresponding 3D component type identifier and 3D video processing parameter information may be packed into the track box (track box) corresponding to the frame-packed video as the metadata entry of the fpdt type; then, the track box is packed into the Movie Box included in the initialization segment or self-initialization media segment. A feasible implementation of packing the 3D component type identifier and 3D video processing parameter information corresponding to the frame packing format type into the track box (track box) corresponding to the frame-packed video as the metadata entry of the fpdt type is: identifying the type of the metadata entry in the Item Info Box as fpdt, and packing an SEI message carrying 3D format description information corresponding to the frame packing format into the Item Data Box; then, packing the Item Info Box and Item Data Box into the Metadata Box; and packing the Metadata Box into the Track Box.

If the 3D format type is 2D plus auxiliary video, the corresponding 3D component type identifier and 3D video processing parameter information may be packed into the track box corresponding to the auxiliary video as the metadata entry of the sirp type; then, the track box corresponding to the auxiliary video is packed into the Movie Box included in the initialization segment or self-initialization media segment. A feasible implementation of packing the 3D component type identifier and 3D video processing parameter information of the 2D plus auxiliary video format into the track box corresponding to the auxiliary video as the metadata entry of the sirp type is: identifying the type of the metadata entry in the Item Info Box as sirp, and packing si_rbsp() into the Item Data Box; then, packing the Item Info Box and Item Data Box into the Metadata Box; and packing the Metadata Box into the Track Box.

If the 3D format type is simulcast, the corresponding 3D component type identifier and 3D video processing parameter information may be respectively packed into a track box corresponding to a video carrying a left view and a track box corresponding to a video carrying a right view as the metadata entry of the stvw type; then, the track box is packed into the Movie Box included in the initialization segment or self-initialization media segment. A feasible implementation of packing the 3D component type identifier and 3D video processing parameter information corresponding to the simulcast format type into the track box corresponding to the video carrying a left view or the video carrying a right view as the metadata entry of the stvw type is: identifying the type of the metadata entry in the Item Info Box as stvw; packing stero_view_Info() into the Item Data Box; packing the Item Info Box and Item Data Box into the Metadata Box; and packing the Metadata Box into the Track Box. Table 4 defines the stereo_view_info() structure.

**Table 4 is a definition of the stereo_view_info() structure.**

| **stero_view_Info()** | **C** | **Descriptor** |
|---|---|---|
| **Stereo_id** | | Used to indicate whether the carried view is a left or right view. |
| **Reference_track_id** | | Indicates the identifier of the video track carrying another view. |

This embodiment further provides another implementation of carrying 3D video processing parameter information through initialization information of the initialization segment or self-initialization media segment:

Different types of boxes carry 3D format identifier information and 3D video processing parameter information corresponding to different 3D format types. The Box type indicates the 3D format type. The box of the fpdt type is used to carry the 3D component type identifier and 3D video processing parameter information corresponding to the frame packing format type. The box of the spif type is used to carry the 3D component type identifier and 3D video processing parameter information corresponding to the 2d plus auxiliary video format type. The box of the stif type is used to carry the 3D component type identifier and 3D video processing parameter information corresponding to the simulcast format type.

The following defines the box.

```
           class FramePackingDataBox extends Box('fpdt'){
                 unsigned int(8) frame_packing_arrangement_type; //indicates the frame
 packing arrangement mode according to which the video is arranged
                 unsigned int(8) sampling_type; //identifier information of the sampling
 type during frame packing
                 unsigned int(8) content_interpretation_type; //identifier information of
 frame placement order during the frame packing operation
           }
           class SupplementalInfoBox extends Box('spif){
                 unsigned int(8) aux_video_type; //indicates the type of the auxiliary
 video
                 unsigned int(8) position_offset_h; //horizontal offset of the auxiliary
 video sample in the spatial sampling grid of the 2D video
                 unsigned int(8) position_offset_v; //vertical offset of the auxiliary video
 sample in the spatial sampling grid of the 2D video
                 if(aux_video_type=0){ //if the auxiliary video is a depth map
                    unsigned int(8) nkar; //depth value range indication information,
 indicating the maximum distance behind the screen
                    unsigned int(8) nknear; //depth value range indication information,
 indicating the maximum distance before the screen
                 }
                  else if(aux_video_type=1){ //if the auxiliary video is a parallax map
                       unsigned int(16) parallax_zero; //a value indicating zero parallax
                       unsigned int(16) parallax_scale; //used to define the zooming ratio
                       of the parallax value range
                       unsigned int(16) dref; //reference viewing distance
                       unsigned int(16) wref; //reference screen width
                 }
           }
           class StereoViewInfoBox extends Box('stif'){
                 unsigned int(8) stereo_id; //used to indicate whether the carried view is a
                 left or right view
                 unsigned int(8) reference_track_id; //indicates the identifier of the video
                 track carrying another view
           }
```

The Box is packed into a Sample Description Box (sample description box). The sample description box is packed into the corresponding track box. Then, the track box is packed into the Movie Box in the initialization segment or self-initialization media segment.

In this embodiment, the 3D format description information in the MPD includes 3D format identifier information, and the 3D format description information in the initialization information of the initialization segment or self-initialization segment includes 3D video processing parameter information. The client determines, according to the 3D format identifier information in the MPD, whether the client supports the 3D format used by the video in the media; if so, the client may select the corresponding presentation, and obtain the corresponding initialization segment according to the HTTP URL of the initialization segment in the segment information of the corresponding presentation in the MPD, obtain 3D video processing parameter information from the initialization information of the corresponding initialization segment, then, obtain the media segment, then, obtain a video sample from the media segment, and process the video sample according to the 3D video processing parameter information. Alternatively, when the segment information of the corresponding presentation in the MPD does not include the HTTP URL of the initialization segment, the client obtains the self-initialization media segment directly according to the HTTP URL or HTTP URL and byte range of the media segment of the selected presentation, obtains video processing parameter information from the initialization information of the media segment of the received first self-initialization media segment, then, obtains a video sample from the self-initialization media segment, and processes the video sample according to the 3D video processing parameter information.

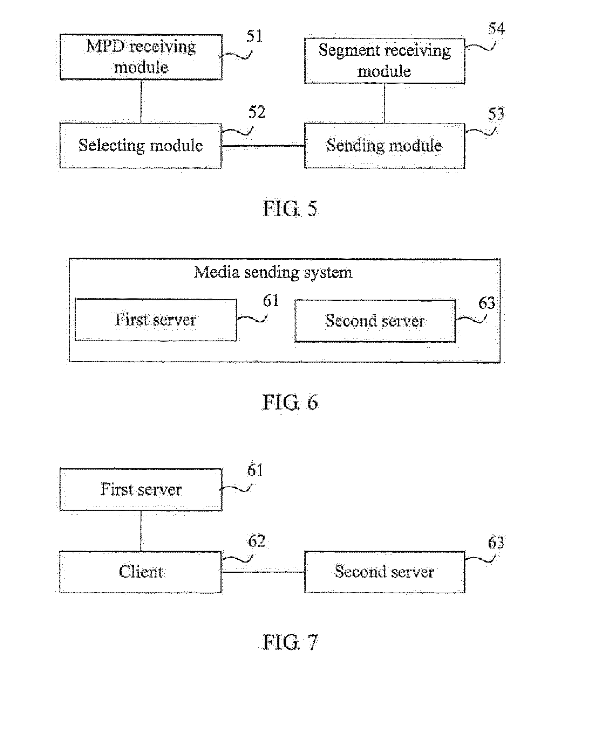

FIG. 5 is a schematic structural diagram of a client according to an embodiment of the invention. As shown in FIG. 5, this embodiment includes: an MPD receiving module 51, a selecting module 52, a sending module 53, and a segment receiving module 54.

The MPD receiving module 51 is configured to receive a media presentation description, where the media presentation description includes 3D format description information of a video. The 3D format description information includes 3D format identifier information. Further, the 3D format description information includes 3D video processing parameter information.

The selecting module 52 is configured to select a presentation according to the 3D format description information received by the MPD receiving module 51.

The sending module 53 is configured to send, according to segment information in the MPD, a segment obtaining request to a server corresponding to the presentation selected by the selecting module 52, where the segment obtaining request is used to obtain a segment of the selected presentation.

The segment receiving module 54 is configured to receive the segment requested by the segment obtaining request sent by the sending module 53.

When the 3D format description information in the MPD does not include the 3D video processing parameter information, initialization information in an initialization segment or a self-initialization media segment received by the segment receiving module 54 includes 3D video processing parameter information.

Specifically, the selecting module 52 includes a judging unit and a selecting unit.

The judging unit is configured to determine, according to the 3D format description information, whether a 3D format of the video in the presentation described by the MPD; and the selecting unit is configured to select the presentation when it is determined that the 3D format of the video in the presentation described by the MPD is supported.

Further, when the 3D format identifier information includes a 3D format type identifier, the judging unit is specifically configured to: determine, according to the 3D format type identifier, a 3D format type used by the video in the presentation described by the MPD, and determine whether the 3D format type is supported; and when the 3D format type is supported, determine that the 3D format of the video in the presentation described by the MPD is supported.

Further, when the 3D format identifier information includes a 3D format type identifier and a 3D component type identifier, the judging unit is specifically configured to: determine, according to the 3D format type identifier, a 3D format type used by the video in the presentation described by the MPD, and determine whether the 3D format type is supported; when the 3D format type is supported, determine, according to the component type identifier, a component type of the video that makes up the presentation described by the MPD, and determine whether the component type in the 3D format identifier information is supported; and when the component type is supported, determine that the 3D format of the video in the presentation described by the MPD is supported.

Further, when the MPD includes the 3D video processing parameter information, the selecting unit is specifically configured to process the 3D video in the media segment according to the 3D video processing parameter information, and obtain a left view to be projected to a left eye and a right view to be projected to a right eye.

In the embodiment of the present Invention, the client first receives, through the MPD receiving module 51, an MPD that includes 3D format description information of a video and is sent by the server; therefore, before the segment receiving module 54 obtains media, the selecting module 52 may determine, according to the 3D format description information in the MPD, a 3D format used by the video in the media, and thereby determine whether to select the corresponding presentation. The client obtains a segment of the selected presentation from the corresponding server according to the segment information corresponding to the selected presentation in the MPD only after the selecting module 52 selects the presentation. Therefore, the embodiment of the present invention shortens the time of determining, by the client, the 3D format used by the video in the media to be sent by the server, and solves the disadvantage of the prior art that the client can obtain 3D format description information only long after starting media reception, namely, after obtaining a video sample carrying 3D format description information.

FIG. 6 is a schematic structural diagram of a media sending system according to an embodiment of the invention. As shown in FIG. 6, this embodiment includes: a first server 61 and a second server 63.

The first server 61 is configured to send a media presentation description to a client, where the media presentation description includes 3D format description information of a video. The first server is a server storing the media presentation description. The 3D format description information includes 3D format identifier information. Further, the 3D format description information includes 3D video processing parameter information.

The second server 63 is configured to receive a segment obtaining request sent by the client, and send a segment, requested by the client, of a selected presentation to the client according to the segment obtaining request. The segment obtaining request is used to obtain the segment of the selected presentation, where the selected presentation is a presentation selected by the client according to the 3D format description information; the second server is a server storing the segment of the selected presentation.

When the 3D format description information in the MPD does not include the 3D video processing parameter information, initialization information in an initialization segment or a self-initialization media segment sent by the second server 63 includes 3D video processing parameter information. The 3D format identifier information includes a 3D format type identifier, or the 3D format identifier information includes a 3D format type identifier and a 3D component type identifier.

In the embodiment of the present invention, the first server adds 3D format description information of a video to an MPD. The server first sends an MPD that includes 3D format description information of a video to the client; before obtaining media, the client may determine, according to the 3D format description information in the MPD, a 3D format used by the video in the media, and thereby determine whether to select the corresponding presentation. The client obtains a segment of the selected presentation from the second server according to the segment information corresponding to the selected presentation in the MPD only after the client selects the presentation. Therefore, the embodiment of the present invention shortens the time of determining, by the client, the 3D format used by the video in the media to be sent by the server, and solves the disadvantage of the prior art that the client can obtain 3D format description information only long after starting media reception, namely, after obtaining a video sample carrying 3D format description information.

FIG. 7 is a schematic structural diagram of a media transmitting system according to an embodiment of the invention. As shown in FIG. 7, this embodiment includes: a first server 61, a client 62, and a second server 63.

The first server 61 is configured to send a media presentation description to the client 62, where the media presentation description includes 3D format description information of a video, and the first server 61 is a server storing the media presentation description. The 3D format description information includes 3D format identifier information. Further, the 3D format description information includes 3D video processing parameter information.

The client 62 is configured to select a presentation according to the 3D format description information, and send a segment obtaining request to the second server according to segment information in the media presentation description, where the segment obtaining request is used to obtain a segment of the selected presentation, and the selected presentation is a presentation selected by the client according to the 3D format description information.

The second server 63 is configured to send the segment, requested by the client, of the selected presentation to the client 62 according to the segment obtaining request, where the second server 63 is a server storing the segment of the selected presentation.

When the 3D format description information in the MPD does not include the 3D video processing parameter information, initialization information in an initialization segment or a self-initialization media segment sent by the second server 63 includes 3D video processing parameter information.

Specifically, the client 62 is configured to: determine, according to the 3D format description information, a 3D format of the video in the presentation described by the MPD; select the presentation when determining whether the 3D format of the video in the presentation described by the MPD is supported; and send the segment obtaining request to the second server according to the segment information in the media presentation description.

Further, when the 3D format identifier information includes a 3D format type identifier,
the client 62 is specifically configured to: determine, according to the 3D format type identifier, a 3D format type used by the video in the presentation described by the MPD, and determine whether the 3D format type is supported; when the 3D format type is supported, determine that the 3D format of the video in the presentation described by the MPD is supported; select the presentation when determining that the 3D format of the video in the presentation described by the MPD is supported; and send the segment obtaining request to the second server according to the segment information in the media presentation description.

Further, when the 3D format identifier information includes a 3D format type identifier and a 3D component type identifier,
the client 62 is specifically configured to: determine, according to the 3D format type identifier, a 3D format type used by the video in the presentation described by the MPD, and determine whether the 3D format type is supported; when the 3D format type is supported, determine, according to the component type identifier, a component type of the video that makes up the presentation described by the MPD, and determine whether the component type in the 3D format identifier information is supported; when the component type is supported, determine that the 3D format of the video in the presentation described by the MPD is supported; select the presentation when determining that the 3D format of the video in the presentation described by the MPD is supported; and send the segment obtaining request to the second server according to the segment information in the media presentation description.

Further, the 3D format identifier information includes a 3D format type identifier and a 3D component type identifier; when the 3D video processing parameter information is included in the 3D format description information and in the initialization information of the initialization segment or the self-initialization media segment,
the client 62 is specifically configured to: determine, according to the 3D format type identifier, a 3D format type used by the video in the presentation described by the MPD, and determine whether the 3D format type is supported; when the 3D format type is supported, determine, according to the component type identifier, a component type of the video that makes up the presentation described by the MPD, and determine whether the component type in the 3D format identifier information is supported; when the component type is supported, determine that the 3D format of the video in the presentation described by the MPD is supported; select the presentation when determining that the 3D format of the video in the presentation described by the MPD is supported; send the segment obtaining request to the second server according to the segment information in the media presentation description; and process the 3D video in the media segment according to the 3D video processing parameter information, and obtain a left view to be projected to a left eye and a right view to be projected to a right eye.

In the embodiment of the present invention, the first server adds 3D format description information of a video to an MPD. The server first sends an MPD that includes 3D format description information of a video to the client; before obtaining media, the client may determine, according to the 3D format description information in the MPD, a 3D format used by the video in the media, and thereby determine whether to select the corresponding presentation. The client obtains a segment of the selected presentation from the second server according to the segment information corresponding to the selected presentation in the MPD only after the client selects the presentation. Therefore, the embodiment of the present invention shortens the time of determining, by the client, the 3D format used by the video in the media to be sent by the server, and solves the disadvantage of the prior art that the client can obtain 3D format description information only long after starting media reception, namely, after obtaining a video sample carrying 3D format description information.

Of course, for the description of the devices and systems in the embodiments of the present invention, reference may be made to the description of related parts in the method embodiments and details are omitted herein.

A person of ordinary skill in the art may understand that, all or a part of the steps of the foregoing method embodiments may be implemented by a program instructing relevant hardware. The foregoing programs may be stored in a computer readable storage medium. When the program runs, the foregoing steps included in the method embodiments are performed. The foregoing storage medium includes various mediums capable of storing program codes, such as a ROM, a RAM, a magnetic disk or an optical disk.

Finally, it should be noted that the foregoing embodiments are merely intended for describing the technical solutions of the present invention other than limiting the present invention. Although the present invention is described in detail with reference to the foregoing embodiments, a person of ordinary skill in the art should understand that modifications may still be made to the technical solutions described in the foregoing embodiments, or equivalent replacements may be made to some technical features thereof, without departing from the idea and scope of the technical solutions of the embodiments of the present invention.

## Claims

1. A media sending method, comprising:
sending a media presentation description MPD to a client, wherein the media presentation description comprises 3D format description information of a video;
receiving a segment obtaining request sent by the client, wherein the segment obtaining request is used to obtain a segment of a selected presentation, wherein the selected presentation is a presentation selected by the client according to the 3D format description information; and
sending the segment, requested by the client, of the selected presentation to the client according to the segment obtaining request.

2. The media sending method according to claim 1, wherein the 3D format description information comprises 3D format identifier information.

3. The media sending method according to claim 1, wherein the 3D format description information comprises 3D format identifier information and 3D video processing parameter information.

4. The media sending method according to claim 1, wherein: the 3D format description information comprises 3D format identifier information; and when the segment is an initialization segment or a self-initialization media segment, 3D video processing parameter information is packed in the segment.

5. The media sending method according to any one of claims 1 to 4, wherein the 3D format description information is carried by an XML element or attribute.

6. The media sending method according to any one of claims 1 to 5, wherein the 3D format identifier information comprises a 3D format type identifier, or the 3D format identifier information comprises a 3D format type identifier and a 3D component type identifier.

7. A media receiving method, comprising:
receiving a media presentation description MPD, wherein the MPD comprises 3D format description information of a video;
selecting a presentation according to the 3D format description information, and sending a segment obtaining request to a server corresponding to the selected presentation according to segment information in the MPD, wherein the segment obtaining request is used to obtain a segment of the selected presentation; and
receiving the segment which is returned by the corresponding server according to the segment obtaining request.

8. The media receiving method according to claim 7, wherein the selecting a presentation according to the 3D format description information comprises:
determining, according to the 3D format description information, whether a 3D format of the video in the presentation described by the MPD is supported; and
selecting the presentation when determining that the 3D format of the video in the presentation described by the MPD is supported.

9. The media receiving method according to claim 7 or 8, wherein: the 3D format description information comprises 3D format identifier information, wherein the 3D format identifier information comprises a 3D format type identifier;
the determining, according to the 3D format description information, whether a 3D format of the video in the presentation described by the MPD is supported comprises:
determining, according to the 3D format type identifier, a 3D format type used by the video in the presentation described by the MPD;
determining whether the 3D format type is supported; and
when the 3D format type is supported, determining that the 3D format of the video in the presentation described by the MPD is supported.

10. The media receiving method according to claim 7 or 8, wherein: the 3D format description information comprises 3D format identifier information, wherein the 3D format identifier information comprises a 3D format type identifier and a 3D component type identifier;
the determining, according to the 3D format description information, whether a 3D format of the video in the presentation described by the MPD is supported comprises:
determining, according to the 3D format type identifier, a 3D format type used by the video in the presentation described by the MPD;
determining whether the 3D format type is supported;
when the 3D format type is supported, determining, according to the component type identifier, a component type of the video that makes up the presentation described by the MPD;
determining whether the component type in the 3D format identifier information is supported; and
when the component type is supported, determining that the 3D format of the video in the presentation described by the MPD is supported.

11. The media receiving method according to claim 9, wherein: the 3D format description information further comprises 3D video processing parameter information; and
after the receiving the segment which is returned by the corresponding server according to the segment obtaining request, the method further comprises:
processing the 3D video in the media segment according to the 3D video processing parameter information, and obtaining a left view to be projected to a left eye and a right view to be projected to a right eye.

12. The media receiving method according to claim 7 or 8, wherein: the 3D format description information comprises 3D format identifier information, and an initialization segment comprises 3D video processing parameter information, or initialization information in the self-initialization media segment comprises 3D video processing parameter information; the 3D format identifier information comprises a 3D format type identifier and a 3D component type identifier;
the determining, according to the 3D format description information, whether a 3D format of the video in the presentation described by the MPD is supported comprises:
determining, according to the 3D format type identifier, a 3D format type used by the video in the presentation described by the MPD, and determining whether the 3D format type is supported;
when the 3D format type is supported, determining, according to the component type identifier, a component type of the video that makes up the presentation described by the MPD, and determining whether the component type in the 3D format identifier information is supported; and
when the component type is supported, determining that the 3D format of the video in the presentation described by the MPD is supported;
after the receiving the segment which is returned by the corresponding server according to the segment obtaining request, the method further comprises:
processing the 3D video in the media segment according to the 3D video processing parameter information, and obtaining a left view to be projected to a left eye and a right view to be projected to a right eye.

13. A client, comprising:
an MPD receiving module, configured to receive a media presentation description, wherein the media presentation description comprises 3D format description information of a video;
a selecting module, configured to select a presentation according to the 3D format description information;
a sending module, configured to send a segment obtaining request to a server corresponding to the selected presentation according to segment information in the media presentation description, wherein the segment obtaining request is used to obtain a segment of the selected presentation; and
a segment receiving module, configured to receive the segment requested by the segment obtaining request.

14. The client according to claim 13, wherein the selecting module comprises:
a judging unit, configured to determine, according to the 3D format description information, whether a 3D format of the video in the presentation described by the MPD; and
a selecting unit, configured to select the presentation when it is determined that the 3D format of the video in the presentation described by the MPD is supported.

15. The client according to claim 14, wherein: the 3D format description information comprises 3D format identifier information, wherein the 3D format identifier information comprises a 3D format type identifier; and
the judging unit is specifically configured to determine, according to the 3D format type identifier, a 3D format type used by the video in the presentation described by the MPD, and determine whether the 3D format type is supported; and when the 3D format type is supported, determine that the 3D format of the video in the presentation described by the MPD is supported.

16. The client according to claim 14, wherein: the 3D format description information comprises 3D format identifier information, wherein the 3D format identifier information comprises a 3D format type identifier and a 3D component type identifier; and
the judging unit is specifically configured to determine, according to the 3D format type identifier, a 3D format type used by the video in the presentation described by the MPD, and determine whether the 3D format type is supported; when the 3D format type is supported, determine, according to the component type identifier, a component type of the video that makes up the presentation described by the MPD, and determine whether the component type in the 3D format identifier information is supported; and when the component type is supported, determine that the 3D format of the video in the presentation described by the MPD is supported.

17. The client according to claim 14, wherein: the 3D format description information further comprises 3D video processing parameter information; and
the selecting unit is specifically configured to process the 3D video in the media segment according to the 3D video processing parameter information, and obtain a left view to be projected to a left eye and a right view to be projected to a right eye.

18. The client according to claim 14, wherein: the 3D format description information comprises 3D format identifier information, and the initialization segment comprises 3D video processing parameter information, or initialization information in the self-initialization media segment comprises 3D video processing parameter information; the 3D format identifier information comprises a 3D format type identifier and a 3D component type identifier;
the judging unit is specifically configured to determine, according to the 3D format type identifier, a 3D format type used by the video in the presentation described by the MPD, and determine whether the 3D format type is supported; when the 3D format type is supported, determine, according to the component type identifier, a component type of the video that makes up the presentation described by the MPD, and determine whether the component type in the 3D format identifier information is supported; and when the component type is supported, determine that the 3D format of the video in the presentation described by the MPD is supported; and
the selecting unit is specifically configured to process the 3D video in the media segment according to the 3D video processing parameter information, and obtain a left view to be projected to a left eye and a right view to be projected to a right eye.

19. A media sending system, comprising:
a first server, configured to send a media presentation description to a client, wherein the media presentation description comprises 3D format description information of a video, and the first server is a server storing the media presentation description; and
the second server, configured to receive a segment obtaining request sent by the client, and send a segment, requested by the client, of a selected presentation to the client according to the segment obtaining request, wherein the segment obtaining request is used to obtain the segment of the selected presentation, the selected presentation is a presentation selected by the client according to the 3D format description information, and the second server is a server storing the segment of the selected presentation.

20. The media sending system according to claim 19, wherein the 3D format description information comprises 3D format identifier information.

21. The media sending system according to claim 20, wherein the 3D format description information further comprises 3D video processing parameter information.

22. The media sending system according to claim 19 or 20, wherein the 3D format description information comprises 3D format identifier information, and an initialization segment comprises 3D video processing parameter information, or initialization information in a self-initialization media segment comprises 3D video processing parameter information.

23. The media sending system according to any one of claims 20 to 22, wherein the 3D format identifier information comprises a 3D format type identifier, or the 3D format identifier information comprises a 3D format type identifier and a 3D component type identifier.

24. A media transmitting system, comprising:
a first server, configured to send a media presentation description to a client, wherein the media presentation description comprises 3D format description information of a video, and the first server is a server storing the media presentation description;
the client, configured to select a presentation according to the 3D format description information, and send a segment obtaining request to a second server according to segment information in the media presentation description, wherein the segment obtaining request is used to obtain a segment of the selected presentation, and the selected presentation is a presentation selected by the client according to the 3D format description information; and
the second server, configured to send the segment, requested by the client, of the selected presentation to the client according to the segment obtaining request, wherein the second server is a server storing the segment of the selected presentation.

25. The media transmitting system according to claim 24, wherein the client is specifically configured to: determine, according to the 3D format description information, whether a 3D format of the video in the presentation described by the MPD; select the presentation when determining that the 3D format of the video in the presentation described by the MPD is supported; and send the segment obtaining request to the second server according to the segment information in the media presentation description.

26. The media transmitting system according to claim 24, wherein: the 3D format description information comprises 3D format identifier information, wherein the 3D format identifier information comprises a 3D format type identifier; and
the client is specifically configured to: determine, according to the 3D format type identifier, a 3D format type used by the video in the presentation described by the MPD, and determine whether the 3D format type is supported; when the 3D format type is supported, determine that a 3D format of the video in the presentation described by the MPD is supported; select the presentation when determining that the 3D format of the video in the presentation described by the MPD is supported; and send the segment obtaining request to the second server according to the segment information in the media presentation description.

27. The media transmitting system according to claim 24, wherein: the 3D format description information comprises 3D format identifier information, wherein the 3D format identifier information comprises a 3D format type identifier and a 3D component type identifier; and
the client is specifically configured to: determine, according to the 3D format type identifier, a 3D format type used by the video in the presentation described by the MPD, and determine whether the 3D format type is supported; when the 3D format type is supported, determine, according to the component type identifier, a component type of the video that makes up the presentation described by the MPD, and determine whether the component type in the 3D format identifier information is supported; when the component type is supported, determine that a 3D format of the video in the presentation described by the MPD is supported; select the presentation when determining that the 3D format of the video in the presentation described by the MPD is supported; and send the segment obtaining request to the second server according to the segment information in the media presentation description.

28. The media transmitting system according to claim 24, wherein: the 3D format description information comprises 3D format identifier information, wherein the 3D format identifier information comprises a 3D format type identifier and a 3D component type identifier; the 3D format description information further comprises 3D video processing parameter information; and
the client is specifically configured to: determine, according to the 3D format type identifier, a 3D format type used by the video in the presentation described by the MPD, and determine whether the 3D format type is supported; when the 3D format type is supported, determine, according to the component type identifier, a component type of the video that makes up the presentation described by the MPD, and determine whether the component type in the 3D format identifier information is supported; when the component type is supported, determine that a 3D format of the video in the presentation described by the MPD is supported; select the presentation when determining that the 3D format of the video in the presentation described by the MPD is supported; send the segment obtaining request to the second server according to the segment information in the media presentation description; and process the 3D video in the media segment according to the 3D video processing parameter information, and obtain a left view to be projected to a left eye and a right view to be projected to a right eye.

29. The media transmitting system according to claim 24, wherein: the 3D format description information comprises 3D format identifier information, and an initialization segment comprises 3D video processing parameter information, or initialization information in a self-initialization media segment comprises 3D video processing parameter information; the 3D format identifier information comprises a 3D format type identifier and a 3D component type identifier; and
the client is specifically configured to: determine, according to the 3D format type identifier, a 3D format type used by the video in the presentation described by the MPD, and determine whether the 3D format type is supported; when the 3D format type is supported, determine, according to the component type identifier, a component type of the video that makes up the presentation described by the MPD, and determine whether the component type in the 3D format identifier information is supported; when the component type is supported, determine that a 3D format of the video in the presentation described by the MPD is supported; select the presentation when determining that the 3D format of the video in the presentation described by the MPD is supported; send the segment obtaining request to the second server according to the segment information in the media presentation description; and process the 3D video in the media segment according to the 3D video processing parameter information, and obtain a left view to be projected to a left eye and a right view to be projected to a right eye.
